# EUROPEAN PATENT APPLICATION

(11) **EP 1 191 417 A1**
(43) Date of publication of application: **27.03.2002**
(21) Application number: 01113908.6
(22) Date of filing: 07.06.2001
(51) Int. Cl.: G05G 1/14

(54) **Adjustable pedal for motor vehicles**

(30) Priority: 22.09.2000 IT TO000887
(71) Applicant: S.I.V. S.p.A., 10040 Volvera (Torino) (IT)
(72) Inventor: Cavaglia', Renato, 10040 Volvera (TO) (IT)
(74) Representative: Di Francesco, Gianni

(57) **Abstract**

Description of the structure of an adjustable pedal, of the type consisting of an arm (8) joined by an axis of rotation (10) to a support body (6), the support body being in turn rotatably connected to a bracket (3) supported by fixed parts of the motor vehicle. The rotation of the arm (8) with respect to the support (6) is controlled by a means for micrometer adjustment.

## Description

The present invention relates to adjustable pedals in general. More in particular, the invention refers to the structure of an adjustable pedal for motor vehicles, for instance the brake pedal, the position of which can be adjusted in order to provide maximum comfort for any driver.

Motor vehicles are generally provided with acceleration, brake and clutch pedals. These pedals usually consist of an arm which is rotatably supported by a bracket placed at the car floor level, a rod or a wire connecting the accelerator, brakes or clutch to the arm of the pedal, and a footboard connected to the non-articulated end of the arm of the pedal, in order to allow the driver to push the arm.

The adjustment of the position of the pedal is necessary in order to achieve the best possible driving position for drivers of any height. The usual way to adjust the position is that of moving the driver seat yet, in case of considerably tall people, this solution implies a reduction of the space available for passengers sitting on the rear seat. In order to avoid this inconvenience, pedals provided with means to adjust their position along the longitudinal direction of the vehicle are known. These devices are known, for example, from patent US 3,643,524 or from patent EP 0,363,546.

However, the devices disclosed in the aforementioned patents are complex and their sliding system for the arm of the pedal needs excellent smoothness so that constant maintenance is required in order to keep them constantly efficient. This leads to an increase in general maintenance costs for the vehicle.

It is therefore an object of the present invention to provide a structure of an adjustable pedal which overcomes the aforementioned inconveniences providing an optimum adjustment of the pedal so that the best driving position can be achieved.

This object is achieved by means of a structure of an adjustable pedal presenting the characteristics set forth in claim 1.

The present invention will become more clear from the following detailed description of the appended drawings showing a preferred embodiment-provided as non-restrictive illustration of the invention - and in which:
- figure 1 is a perspective view of two non-operative positions of the structure of the pedal according to the invention, and

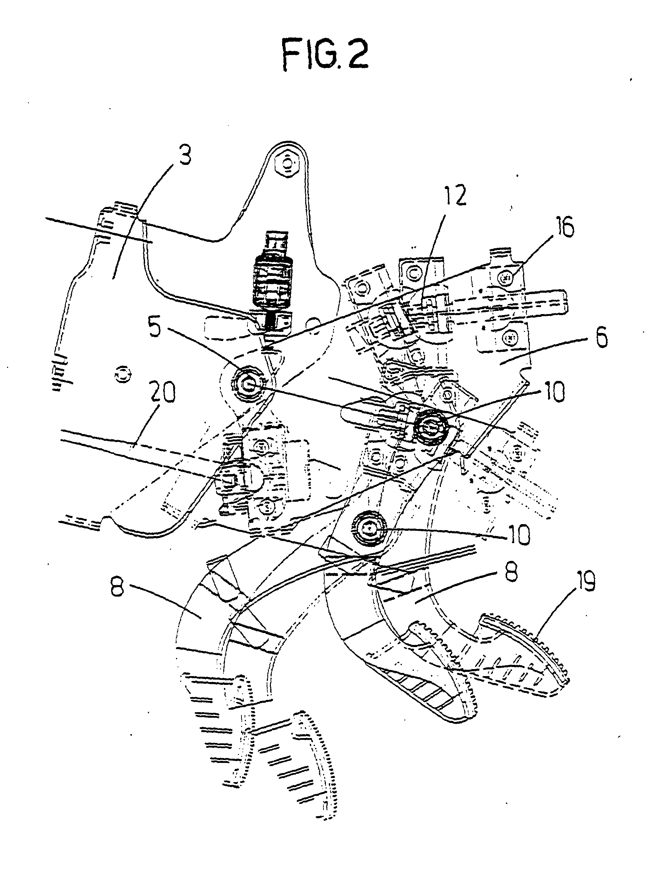

- figure 2 is a side view of different operative positions, partially transparent, of the structure in figure 1.

With reference to the figures, reference number 1 indicates a structure of an adjustable pedal in the position according to the present invention.

This structure generally includes a U-shaped bracket 3, consisting of a base and two side walls. The base is connected by known means to the body of the motor vehicle at a point located under the dashboard, a little over the floor (not shown).

At the side wall of the bracket 3 a support body 6 for the arm 8 of the brake pedal is pivoted by means of an axis 5, and it is as U-shaped as the bracket 3, the side ends being connected to the axis 5 and the base facing the base of the support 3. The arm 8 is pivoted by means of an axis of rotation 10 on that support body 6. The upper part of the arm 8 extends beyond the point where it is connected to the support 6 till it houses the mobile seat 12 for the ball head of a worm screw 14, which can be screwed/unscrewed into a bolt 16 fixed on the internal face of the base 18 of the support 6. At its opposite end, the arm 8 presents a footboard 19 where the driver's foot rests. Besides, the support body 6 houses, inside it and fixed at its side below the point where it is pivoted to the support 3, a seat adapted to engage and hook the control push rod 20 of the brake system or that of the clutch or accelerator.

The U-shape of the bracket 3 and the support 6, as well as their connection to the side ends, are intended to limit a closed space and to house the connection and adjustment devices, protecting them against possible impacts and reducing the overall size of the structure.

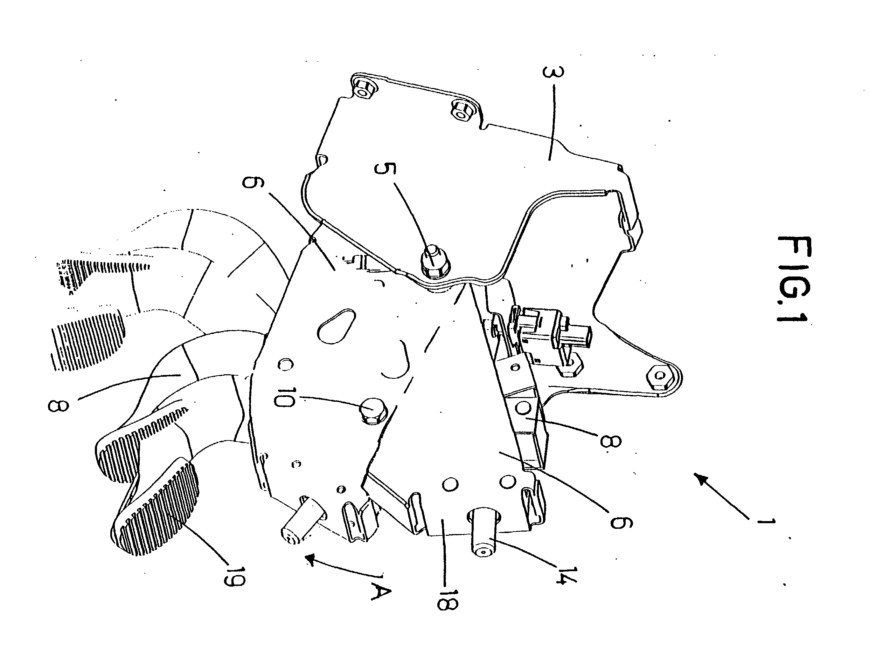

With the structure of the pedal according to the invention, the control of the brake and/or clutch and/or accelerator will be operated by rotating, as indicated by arrow A in figure 1, the whole support 6 on the axis 5, as a consequence of a force applied by the driver on the footboard 19 and of the following movement of the push rod 20. On the other hand, the adjustment of the position of the footboard 19 in relationship to said support body 6, will take place by acting, through a known means, such as a Bowden cable operated by an electrical motor, on the worm screw whether the end of the arm 8 is to be moved near or away so that the footboard 19 of the pedal is moved in relationship to the driver's seat.

It is obviously understood that the component parts of the structure can be modified as to their shape and connection points, and that the worm screw 14 can be substituted by an equivalent means, for example by and hydraulic piston, without going beyond the scope of the present invention as it is described in the appended claims.

## Claims

1. A structure of an adjustable pedal of the type consisting of an arm (8) joined to a support body (6) which is in turn rotatably connected to a bracket (3) supported by fixed parts of the motor vehicle, said arm comprising a footboard, connected to the free end, in order to allow the driver to operate it, **characterised in that** the arm (8) is joined to the support body (6) by means of an axis of rotation (10) and that the rotation of the arm (8) in relationship to the support (6) is controlled by a means for micrometer adjustment (14).

2. A structure of a pedal as claimed in claim 1, **characterised in that** the means for micrometer adjustment is a worm screw (14) operated by an electrical motor.

3. A structure of a pedal as claimed in claim 1, **characterised in that** the bracket (3) and the support (6) are U-shaped and are rotatably connected, by means of said axis (10), at the ends of their sides so that they limit, inside them, a closed space.

4. A structure of a pedal as claimed in claim 1 and 2 **characterised in that** the arm (8) is provided with a mobile seat (12) for the worm screw (14), located over the axis of rotation (10).
